(19) Europäisches Patentamt
European Patent Office
Office européen des brevets

(11) **EP 2 769 450 B1**

(12) **EUROPÄISCHE PATENTSCHRIFT**

(45) Veröffentlichungstag und Bekanntmachung des Hinweises auf die Patenterteilung:
**10.01.2018 Patentblatt 2018/02**

(21) Anmeldenummer: **12775155.0**

(22) Anmeldetag: **14.09.2012**

(51) Int Cl.:
**H02M 1/42** (2007.01)     **H02J 5/00** (2016.01)

(86) Internationale Anmeldenummer:
**PCT/EP2012/068129**

(87) Internationale Veröffentlichungsnummer:
**WO 2013/056923 (25.04.2013 Gazette 2013/17)**

(54) **NETZNACHBILDUNG IM SEKUNDÄRKREIS DER BERÜHRUNGSLOSEN ENERGIEÜBERTRAGUNG**

NETWORK SIMULATION IN THE SECONDARY CIRCUIT OF CONTACTLESS POWER TRANSMISSION

SIMULATION DE RESEAU DANS UN CIRCUIT SECONDAIRE DE TRANSFERT D'ENERGIE SANS CONTACT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.10.2011 DE 102011116057**

(43) Veröffentlichungstag der Anmeldung:
**27.08.2014 Patentblatt 2014/35**

(73) Patentinhaber: **Paul Vahle GmbH & Co. KG**
**59174 Kamen (DE)**

(72) Erfinder: **TURKI, Faical**
**59192 Bergkamen (DE)**

(74) Vertreter: **Lenzing Gerber Stute**
**PartG von Patentanwälten m.b.B.**
**Bahnstraße 9**
**40212 Düsseldorf (DE)**

(56) Entgegenhaltungen:
**EP-A1- 1 039 622     EP-A1- 1 249 928**
**WO-A1-99/08359     WO-A2-2011/127449**
**GB-A- 1 268 265**

**Beschreibung**

Die vorliegende Erfindung betrifft ein induktives Energieübertragungssystem mit mindestens einer Primärspule und mindestens einer Sekundärspule, die miteinander gekoppelt sind und die jeweils mit mindestens einer Kapazität einen primärseitigen und sekundärseitigen Resonanzkreis bilden.

Bei konventionellen berührungslosen Energieübertragungssystemen wird stets aus einer primärseitigen Eingangswechselspannung mit Netzfrequenz zunächst eine Gleichspannung generiert, welche anschließend mittels eines Wechselrichters in eine Wechselspannung mit einer höheren Frequenz umgewandelt und dem primärseitigen Resonanzkreis, bestehend aus Primärspule und Kapazität, zugeführt wird. Durch die magnetische Kopplung zwischen der Primärspule und der Sekundärspule wird die am Ausgang des sekundärseitigen Resonanzkreises, welcher aus der Sekundärspule und mindestens einer Kapazität gebildet ist, anliegende Wechselspannung hoher Frequenz zunächst geglättet, um dann mittels eines weiteren Wechselrichters eine der primärseitigen Eingangswechselspannung entsprechende sekundärseitige Ausgangsspannung zu erzeugen. Um sekundärseitige Lasten mit einer netzähnlichen Wechselspannung versorgen zu können, muss dabei die sekundärseitig induzierte Spannung gleichgerichtet werden und mittels des sekundärseitigen Wechselrichters eine Trapez- bzw. Sinusspannung erzeugt werden. Beim Einsatz derartiger Energieübertragungssysteme wird speziell im nicht industriellen Einsatz eine PFC-Stufe (Power Factor Correction) benötigt, damit die Netzrückwirkungen und der Leistungsfaktor die erforderlichen gesetzlichen Bedingungen erfüllen.

Aus der WO2011/127449 ist ein Energieübertragungssystem bekannt, bei dem auf der Sekundärseite mittels eines Gleichrichters und Umpolgliedes aus der primärseitig induzierten Spannung eine Wechselspannung erzeugbar ist. Aufgabe der vorliegenden Erfindung ist es, ein induktives Energieübertragungssystem bereitzustellen, welches einfacher im Aufbau ist und aus weniger Teilen besteht und dennoch die gesetzlichen Bestimmungen erfüllt.

EP 1249928 A1 offenbart ein verfahren und Spanungswandler zum Umwandeln einer Eingangsgleichspannung in eine Wechselspannung im Netzfrequenzbereich.

Diese Aufgabe wird erfindungsgemäß mit einem induktiven Energieübertragungssystem mit den Merkmalen des Anspruchs 1 gelöst. Weitere vorteilhafte Ausgestaltungen des induktiven Energieübertragungssystems nach Anspruch 1 ergeben sich durch die Merkmale der Unteransprüche.

Das erfindungsgemäße induktive Energieübertragungssystem kann auch als berührungsloses Energieübertragungssystem bezeichnet werden. Dabei wird unter berührungslos verstanden, dass kein mechanischer Kontakt zwischen der Primär- und der Sekundärseite bestehen muss. Sofern die Sekundärspule in einem Gehäuse gekapselt ist, kann das Gehäuse auch unmittelbar auf der ebenfalls gekapselten Primärseite aufliegen.

Das erfindungsgemäße Energieübertragungssystem weist einen primärseitigen Wechselrichter auf, der aus einer unipolaren Primärspannung oder einer Gleichspannung eine getaktete Rechteckspannung erzeugt und diese dem primärseitigen Resonanzkreis, bestehend aus Spule und Kapazität, zuführt. Dabei wird die Blindspannung über die Kapazitäten kompensiert. Im Sinne der Erfindung wird unter einer unipolaren Spannung eine gleichgerichtete Wechselspannung verstanden.

Die eingangsseitig für den primären Gleichrichter benötigte unipolare Primärspannung kann z.B. mittels eines Gleichrichters aus einer Eingangswechselspannung mit Netzfrequenz erzeugt werden. Die dem primärseitigen Wechselrichter zugeführte unipolare Spannung weist aufgrund des kapazitätsarmen Spannungszwischenkreises einen Wechselanteil auf.

Der primärseitige Wechselrichter wird derart getaktet oder eingeregelt oder die Taktung der vom primärseitigen Wechselrichter erzeugte Rechteckspannung wird derart gewählt oder eingeregelt, dass sich eine im sekundärseitigen Resonanzkreis induzierte Sekundärwechselspannung mit einer Trägerfrequenz ergibt, wobei die Amplitude der Sekundärwechselspannung mit einer Netzfrequenz oszilliert und optional auch mit dieser in Phase sein kann. Die Trägerfrequenz liegt vorteilhaft im kHz-Bereich. Unter Netzfrequenz wird die national vorherrschende Netzfrequenz, z.B. 50 Hz für Europa und 60 Hz für USA, verstanden. Sofern der Primärstrom mit der Frequenz des Netzes in Phase ist, ist der im primären Resonanzkreis fließende Strom mit dem Netz synchronisiert. Hierdurch wird gewährleistet, dass die induzierte Sekundärspannung auch die gleiche Form aufweist.

Die induzierte Sekundärwechselspannung kann gleich oder annähernd die Form

$$u_{sek}(t) = \hat{u}_{sek} * \sin(2*\Pi*f_T*t) * \sin(2*\Pi*f_0*t)$$

aufweisen.

Der magnetische Kreis, der sich mit den Kompensations-Kapazitäten in Resonanz befindet, erfährt aufgrund der Erregung durch die Wechselrichter-Spannung des primärseitigen Wechselrichters einen Strom mit der gleichen Frequenz. Dieser Strom erzeugt ein magnetisches Feld, das der Energieübertragung auf den Sekundärkreis dient.

Mittels einer sekundärseitigen Einrichtung wird die am Ausgang des sekundären Resonanzkreises anliegende oszillierende hochfrequente Spannung in eine nach Möglichkeit sinusförmige sekundärseitige Ausgangsspannung umgewandelt. Der hochfrequente Anteil wird dabei durch die Gleichrichtung eliminiert. Es entsteht dabei eine Spannung, die die Form der Netzspannung besitzt und deren Amplitude proportional zum magnetischen Fluss in der Sekundärspule ist.

Bei gleichbleibenden magnetischen Größen kann der Primärstrom vorteilhaft so gewählt oder eingeregelt werden, dass die sekundärseitige Ausgangsspannung der Netzspannung, d.h. 230 VA, 50Hz, entspricht.

Bei variabler magnetischer Kopplung muss der primärseitige Wechselrichter den Primärstrom in der Primärspule so regeln, dass die sekundärseitige Ausgangsspannung konstant bleibt. Hierzu kann vorteilhaft eine Rückmeldung über einen Kanal vom Sekundärkreis zum Primärkreis erfolgen, welcher die Information über die Sekundärspannung der Steuereinrichtung des primärseitigen Wechselrichters zuführt.

Die Einrichtung kann einen sekundärseitigen Wechselrichter und ein nachgeschaltetes Umpolglied umfassen, die durch diskrete Schaltungen realisiert sind. Es ist jedoch auch möglich, den sekundärseitigen Gleichrichter und das Umpolglied der Einrichtung in einer Leistungshalbleiterstufe zusammenzufassen. Durch das Zusammenfassen kann vorteilhaft der Wirkungsgrad verbessert werden. Der sekundärseitige Gleichrichter kann einen kapazitätsarmen Glättungskondensator aufweisen, so dass am Ausgang des Gleichrichters eine Spannung anliegt, die einer gleichgerichteten, insbesondere sinusförmigen, Netzspannung entspricht.

Das Prinzip, welches hinter der Erfindung steht, entspricht ungefähr dem Prinzip der Amplitudenmodulation in der Signalübertragung. Die hochfrequente Trägerfrequenz oszilliert mit der Netzfrequenz. Dabei wird die hochfrequente induzierte Spannung jeweils über eine Halbwelle der Netzfrequenz, d.h. der Einhüllenden, gleichgerichtet. Dabei muss das lokale Minimum der Einhüllenden der Sekundärspannung erkannt werden, damit alternierend die Polarität der gleichgerichteten Sekundärspannung umgepolt werden kann.

In einer ersten möglichen Ausführungsform sind der sekundärseitige Gleichrichter und das Umpolglied nicht in einer Schaltung zusammengefasst, wobei am Ausgang des sekundärseitigen Gleichrichters eine gleichgerichtete Netzspannung anliegt, welche mittels des Umpolgliedes in eine bipolare, vorteilhaft sinusförmige Ausgangsspannung gepolt wird. Hierzu ist jede zweite Halbwelle umzupolen. Dies kann mittels eines Halbleiter-Umpolgliedes erfolgen.

Sofern der sekundärseitige Gleichrichter und das Umpolglied in einer Leistungshalbleiterstufe zusammengefasst sind, erfolgt die Gleichrichtung und Umpolung mit denselben Leistungshalbleitern.

Ein Glättungsspeicher, insbesondere in Form eines Kondensators, dient der Glättung und Stabilisierung der sekundären Ausgangsspannung.

Die sekundärseitige Einrichtung kann insbesondere vier Leistungshalbleiter aufweisen, die zwei Gruppen von insbesondere gleich vielen Leistungshalbleitern bilden. Die Leistungshalbleiter einer Gruppe können zusammen mittels eines Gruppensteuersignals geschaltet werden, wobei jeweils nur eine der Gruppen aktiv geschaltet wird. Durch das abwechselnde Aktivschalten der Gruppen wird eine bipolare, insbesondere sinusförmige sekundärseitige Ausgangsspannung erzeugt.

Zwischen den aktiven Phasen der Gruppen ist eine Totzeit vorzusehen, während derer beide Gruppen inaktiv sind, d.h. beide Gruppen von Leistungshalbleitern geschlossen sind und somit nicht gleichrichtend wirken, wodurch verhindert wird, dass sich Überspannungen bilden, die zur Zerstörung der Halbleiter führen können.

Mehrere schaltungstechnische Realisierungen sind möglich.

So kann die Einrichtung in einer zweiten Ausführungsform vier rückwärts leitende Leistungshalbleiter aufweisen, die zwei Gruppen zu je zwei Leistungshalbleiter bilden, wobei die Leistungshalbleiter jeder Gruppe in Reihe geschaltet sind und mittels des gleichen Gruppensteuersignals aktiv geschaltet werden. Die Anode des einen und die Kathode des anderen Leistungshalbleiters der einen ersten Gruppe sind in einem ersten Verbindungspunkt miteinander elektrisch verbunden. Gleiches gilt für die Leistungshalbleiter der anderen zweiten Gruppe, welche in einem zweiten Verbindungspunkt miteinander elektrisch verbunden sind. Die Verbindungspunkte bilden dabei die Anschlusspunkte für den sekundärseitigen Resonanzkreis. Zusätzlich ist jedem Leistungshalbleiter jeweils eine Freilaufdiode parallel geschaltet. Sofern rückwärtsleitende IGBTs oder MOSFETS verwendet werden, ist die Freilaufdiode in diesen bereits implementiert und die zusätzlichen Freilaufdioden werden nicht benötigt. Die beiden Gruppen sind dabei mit den freien Anoden ihres einen Leistungshalbleiters in einem weiteren Verbindungspunkt miteinander in Verbindung und damit in Reihe geschaltet, wobei parallel zur Reihenschaltung der beiden Gruppen mindestens ein Kondensator parallel geschaltet ist. Die sekundärseitige Ausgangsspannung wird an den Klemmen des Kondensators abgegriffen.

In einer dritten und vierten Ausführungsform weist die Einrichtung zwei Gruppen von Leistungshalbleitern auf, wobei jede Gruppe jeweils einen rückwärts leitenden und einen rückwärts sperrenden Leistungshalbleiter aufweist.

Bei der dritten Ausführungsform sind der rückwärts leitende Leistungshalbleiter der ersten Gruppe und der rückwärts sperrende Leistungshalbleiter der zweiten Gruppe mit ihren Anoden in einem Verbindungspunkt miteinander elektrisch verbunden und bilden eine erste Reihenschaltung. Eine zweite Reihenschaltung wird durch den rückwärts sperrenden Leistungshalbleiter der ersten Gruppe und den rückwärts leitenden Leistungshalbleiter der zweiten Gruppe gebildet, welche mit ihren Anoden in einem weiteren Verbindungspunkt miteinander elektrisch verbunden sind. Den rückwärts leitenden Leistungshalbleitern ist jeweils eine Freilaufdiode parallel geschaltet sofern diese bei Verwendung eines rückwärtsleitenden IGBTs oder MOSFETS nicht bereits in diesem implementiert ist. Die beiden Reihenschaltungen sind parallel zum Ausgangskondensator geschaltet, wobei die beiden Verbindungspunkte die Anschlusspunkte für den sekundärseitigen Resonanzkreis bilden.

Bei der vierten Ausführungsform sind die beiden Leistungshalbleiter jeder Gruppe in Reihe geschaltet und mittels des jeweiligen Gruppensteuersignals gleichzeitig aktiv geschaltet. Dabei ist jeweils die Anode des einen und die Kathode des anderen Leistungshalbleiters der einen ersten Gruppe in einem ersten Verbindungspunkt miteinander elektrisch verbunden und die Anode des einen und die Kathode des anderen Leistungshalbleiters der anderen zweiten Gruppe in einem zweiten Verbindungspunkt miteinander verbunden. Die beiden Verbindungspunkte bilden die Anschlusspunkte für den sekundärseitigen Resonanzkreis. Zusätzlich sind den rückwärtsleitenden Leistungshalbleitern jeweils Freilaufdioden parallel geschaltet. Bei Verwendung eines rückwärts leitenden IGBT oder insbesondere MOSFET wird, wie oben beschrieben, keine zusätzliche Freilaufdiode benötigt. Die Anode des rückwärts sperrenden Leistungshalbleiters der ersten Gruppe ist mit der Kathode des rückwärts sperrenden Leistungshalbleiters der zweiten Gruppe elektrisch leitend verbunden. Die Kathode des rückwärts sperrenden Leistungshalbleiters der ersten Gruppe ist mit der Anode des rückwärts sperrenden Leistungshalbleiters der zweiten Gruppe elektrisch leitend verbunden, wobei die Kathoden der rückwärts leitenden Leistungshalbleiter mit den Anschlüssen des Ausgangskondensators verbunden sind.

Eine Steuereinrichtung generiert die Gruppensteuersignale, mittels denen die Leistungshalbleiter gesteuert werden. Dabei erkennt oder berechnet die Steuereinrichtung das lokale Minimum der Einhüllenden der induzierten Sekundärspannung und schaltet mittels der Gruppensteuersignale die Gruppen oder einzelnen Leistungshalbleiter der Gruppen wahlweise, insbesondere abwechselnd, aktiv. Dabei werden die Gruppensignale derart erzeugt, dass eine genügende Totzeit zwischen den aktiven Phasen der beiden Gruppen besteht, während der beide Gruppen von Leistungshalbleitern inaktiv sind.

Vorteilhaft benötigt das erfindungsgemäße Energieübertragungssystem keine PFC-Stufe.

Nachfolgend werden mögliche elektrische Schaltungen der vorbeschriebenen Ausführungsformen anhand von Zeichnungen näher erläutert.

Es zeigen:

Fig. 1:        Ein Energieübertragungssystem nach dem Stand der Technik;

Fig. 2:        eine mögliche Ausführungsform, wobei die sekundärseitige Einrichtung einen Gleichrichter und ein Umpolglied umfasst;

Fig. 3a:       erste mögliche Ausführungsform, wobei die Einrichtung vier rückwärtsleitende Leistungshalbleiter, insbesondere in Form von IG-BTs aufweist, die die Gleichrichtung und Umpolung realisieren;

Fig. 3b:       Spannungsverläufe und Ansteuersingale;

Fig. 3c:       Ersatzschaltbilder;

Fig. 4:        Schaltung für die zweite mögliche Ausführungsform;

Fig. 5:        Schaltung für die dritte mögliche Ausführungsform, welche eine Hochsetzmöglichkeit bietet.

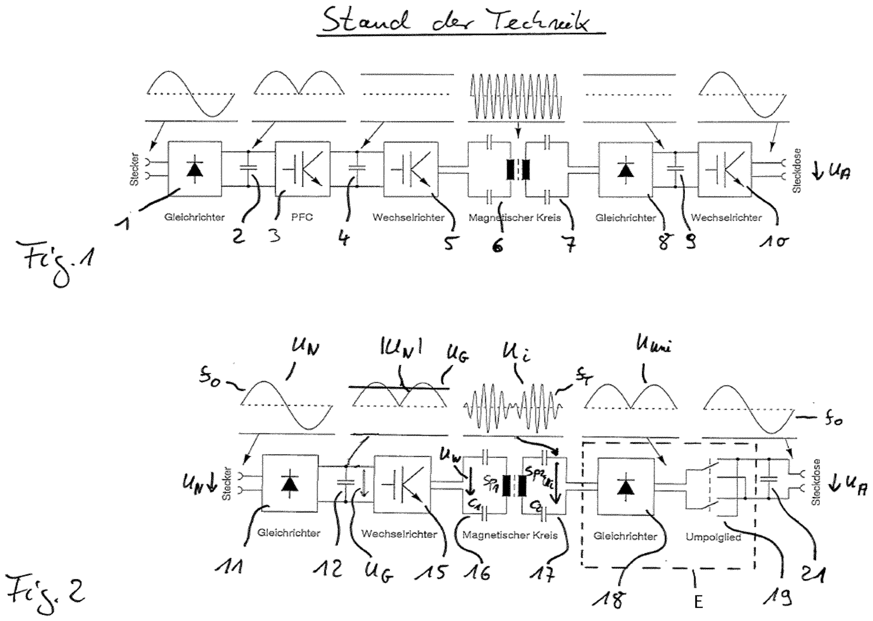

Die Figur 1 zeigt ein induktives Energieübertragungssystem nach dem Stand der Technik. Der primärseitige Gleichrichter 1 wird über einen Stecker mit einer Netzspannung, z.B. 230VA, 50 Hz, gespeist. Diese richtet der Gleichrichter 1 zu einer unipolaren Spannung mit Wechselanteil gleich, welche an der Kapazität 3 abgreifbar und oberhalb des Blockschaltbildes dargestellt ist. Diese unipolare Spannung wird einer PFC-Stufe (Power Factor Correction) zugeführt, damit die Netzrückwirkungen und der Leistungsfaktor die erforderlichen gesetzlichen Bedingungen erfüllen. Mittels eines nachgeschalteten Kondensators wird eine Gleichspannung erzeugt, die ein primärseitiger Wechselrichter 5 derart taktet, dass über den primärseitigen Reihenschwingkreis 5 eine konstante hochfrequente Spannung in den sekundärseitigen Reihenschwingkreis 7 induziert wird. Diese wird mittels eines nachgeschalteten Gleichrichters 8 in Verbindung mit dem Glättungskondensator 9 in eine Gleichspannung gleichgerichtet, welche mittels des sekundärseitigen Wechselrichters 10 in eine sinusförmige Ausgangsspannung $U_A$ umgeformt wird.

In Figur 2 ist ein Blockschaltbild für eine Ausführungsform des erfindungsgemäßen induktiven Energieübertragungssystems dargestellt. Auf der Primärseite ist ein Gleichrichter 11 angeordnet, der aus einer Netzwechselspannung $U_N$ mit der Frequenz $f_0$ eine unipolare Spannung $|U_N|$ erzeugt. Der Kondensator 12 ist dabei kapazitätsarm, so dass die unipolare Spannung $|U_N|$ sich noch mit der Netzfrequenz $f_0$ ändert. Es ist auch möglich, dass mittels des nachgeschalteten Kondensators 12 die geglättete Spannung $U_G$ erzeugt wird, welche als Eingangsspannung für den primärseitigen Wechselrichter 15 dient. Sofern eine Gleichspannung, z.B. aus einer Batterie bereitsteht, kann auch auf den primärseitigen Gleichrichter 11 verzichtet werden. Sofern eine Gleichspannung als Eingangsspannung $U_G$ für den Wechselrichter dient, muss der Wechselrichter 15, wie nachfolgend beschrieben, anders getaktet werden als bei Verwendung der unipolaren Spannung $|U_N|$.

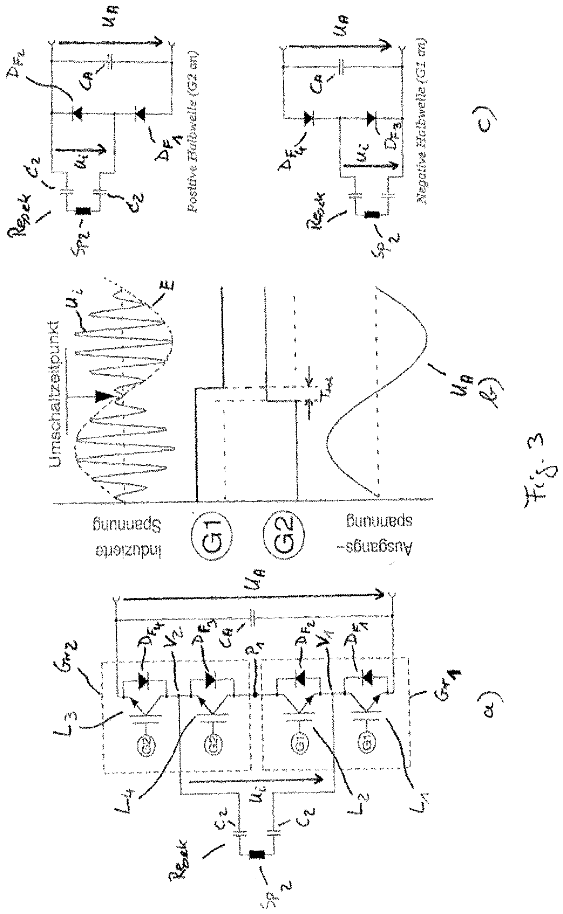

Sofern als Eingangsspannung für den Wechselrichter 15 die unipolare Spannung $|U_N|$ verwendet wird, reicht es prinzipiell aus, den Wechselrichter 15 mit einer konstanten Frequenz $f_W$ zu takten, damit sich eine induzierte Spannung $U_i$ ergibt, wie sie in den Figuren 2 und 3b dargestellt ist, welche mit der Netzfrequenz $f_0$ oszilliert. Die Welligkeit der Spannung $|U_N|$ überträgt sich dabei auf die induzierte Spannung $U_i$. Die Taktfrequenz $f_W$ ist dabei so zu wählen, dass sich eine induzierte Spannung $U_i$ mit der Frequenz $f_T$ ergibt, wobei $f_T$ im kHz-Bereich liegt. Die Taktfrequenz der Rechteckspannung $U_W$ kann entweder fest sein oder sich an die Resonanzfrequenz des Primärkreises 16 anpassen. Der Wechselrichter 15 sorgt mit seiner Taktung für einen Primärstrom, welcher durch die Primärspule $Sp_1$ und die in Reihe geschalteten Kondensatoren $C_1$ (Reihenschwingkreis 16) fließt, dessen Einhüllende EH die Netzfrequenz $f_0$ besitzt und nach Möglichkeit zu dieser in Phase ist. Die Einhüllende EH ist somit mit dem Netz synchronisiert, wodurch die induzierte Spannung $U_i$ die gleiche Form wie der Primärstrom hat. Die Amplitude der Trägerwechselspannung schwingt mit $\sin(2*\pi*f_0*t)$, d.h. mit der Netzfrequenz $f_0$. Der Sekundärschwingkreis 17 ist ebenfalls durch die Reihenschaltung aus Sekundärspule $Sp_2$ und Kondensatoren $C_2$ gebildet. Die induzierte Spannung $U_i$ wird von dem nachgeschalteten Gleichrichter 18 in die unipolare Wechselspannung $U_{uni}$ umgeformt, wobei diese die Frequenz $f_0$ aufweist. Ein nachgeschaltetes Umpolglied erzeugt aus der unipolaren Wechselspannung $U_{uni}$ die gewünschte bipolare und im bevorzugten Fall eine sinusförmige Ausgangsspannung $U_A$ mit der Frequenz $f_0$, zu deren Glättung noch der Glättungskondensator 21 dient. Der Gleichrichter 18 sowie das Umpolglied 19 bilden zusammen die sekundärseitige Einrichtung E, die aus der induzierten Spannung $U_i$ die sekundärseitige Ausgangsspannung $U_A$ formen.

Sofern die Eingangsspannung des Wechselrichters 15 eine konstante Eingangsspannung $U_G$ ist, muss der Wechselrichter 15 mittels Pulsweitenmodulation oder Wellentaktung getaktet werden, damit sich eine induzierte Spannung $U_i$ ergibt, deren Einhüllende wie dargestellt oszilliert.

Die Figur 3a zeigt eine erste mögliche Ausführungsform der sekundärseitigen Einrichtung E, wobei der aus Figur 2 erläuterte Gleichrichter 18 und das Umpolglied 19 durch eine Reihenschaltung von vier rückwärts leitenden Leistungshalbleitern $L_1$-$L_4$ ersetzt sind, welche aus der induzierten Spannung $U_i$ die Ausgangsspannung $U_A$ formen. Durch die Zusammenfassung von Gleichrichter und Umpolglied in eine Stufe wird der Wirkungsgrad gegenüber der Schaltung gemäß Figur 2 deutlich verbessert.

Die Leistungshalbleiter $L_1$-$L_4$ bilden zwei Gruppen $Gr_1$ und $Gr_2$ mit je zwei Leistungshalbleitern, wobei die Leistungshalbleiter einer Gruppe $Gr_1$ bzw. $Gr_2$ durch die von einer Steuereinrichtung erzeugten Gruppensteuersignale $G_1$ bzw. $G_2$ gleichzeitig gesteuert, bzw. geschaltet werden und zueinander in Reihe mit der gleichen Durchflussrichtung geschaltet sind. Parallel zu allen Leistungshalbleitern $L_1$-$L_4$ sind Freilaufdioden $D_F$ geschaltet. Die Freilaufdioden $D_F$ können auch in dem Leistungshalbleiter $L_{1-4}$ implementiert sein. Die Reihenschaltungen der Gruppen $Gr_1$ und $Gr_2$ sind ebenfalls in Reihe geschaltet, wobei jedoch die Durchflussrichtung der Leistungshalbleiter $L_1$, $L_2$ der ersten Gruppe $Gr_1$ entgegengesetzt geschaltet ist zur Durchflussrichtung der Leistungshalbleiter $L_3$, $L_4$ der zweiten Gruppe $Gr_2$. Im Verbindungspunkt $P_1$ ist somit die Anode des Leistungshalbleiters $L_2$ mit der Anode des Leistungshalbleiters $L_3$ verbunden. Die Verbindungspunkte $V_1$ und $V_2$ sind jeweils die Verbindungspunkte der beiden Leistungshalbleiter einer Gruppe und bilden die Verbindungspunkte für den sekundären Reihenschwingkreis $Re_{sek}$, bestehend aus Sekundärspule $Sp_2$ und Kondensatoren $C_2$. Parallel zur Reihenschaltung der Gruppen $Gr_1$ und $Gr_2$ ist der Kondensator $C_A$ geschaltet, an dem die sekundäre Ausgangsspannung $U_A$ anliegt.

Die Figur 3b zeigt die Spannungsverläufe der induzierten Spannung $U_i$ (oben), die Pegel der Gruppensteuerungssignale $G_1$ und $G_2$ sowie die Ausgangsspannung $U_A$. Die Amplitude der induzierten Spannung $U_i$ schwingt mit der Netzfrequenz $f_0$, wodurch sich eine Einhüllende EH ergibt. Die Gruppensteuerungssignale $G_1$ und $G_2$ sind auf den Verlauf der Einhüllenden EH abgestimmt. Die nicht dargestellte Steuereinrichtung ist derart ausgebildet, dass sie das Minimum der Einhüllenden EH der induzierten Spannung $U_i$ erkennt oder den zeitlichen Verlauf durch Signale des primärseitigen Wechselrichters 15 kennt, so dass eine Messung der induzierten Spannung $U_i$ nicht erforderlich ist.

Wenn das Signal G1 für die rückwärts leitenden Leistungshalbleiter "high" ist, ist die Gruppe $Gr_x$ im Sinne der Erfindung "inaktiv", da deren Leistungshalbleiter leitend sind und die Leistungshalbleiter somit keine sperrende, d.h. gleichrichtende Funktion, übernehmen. Als aktive Gruppe $Gr_x$ wird dagegen eine Gruppe oder ein Leistungshalbleiter verstanden, wenn sie bzw. er eine Sperrfunktion und damit gleichrichtende Funktion übernimmt.

Die Gruppensteuersignale $G_1$ und $G_2$ werden abwechselnd nach jedem lokalen Minimum der Einhüllenden EH der induzierten Spannung $U_i$ eingeschaltet, wobei vor dem "aktiv"-Schalten der nächsten Gruppe die vorher eingeschaltete Gruppe zumindest für eine Totzeit $T_{tot}$ inaktiv geschaltet sein muss. Während der Totzeit $T_{tot}$ sind somit alle Leistungshalbleiter $L_1$ bis $L_4$ geschlossen. Dies dient der Vermeidung von Überspannungen. Die Totzeit $T_{tot}$ kann im Bereich von 100 ns liegen.

Die Figur 3c zeigt die Ersatzschaltbilder für die abwechselnd leitend geschalteten Gruppen $Gr_1$ und $Gr_2$. Dabei zeigt das obere Ersatzschaltbild die Schaltung, welche sich ergibt, wenn während der positiven Halbwelle der Einhüllenden EH die Leistungshalbleiter $L_3$ und $L_4$ mittels des Gruppensteuersignals G2 leitend geschaltet sind. Während die

durch die Gruppe $Gr_2$ gebildete Halbleiterbrücke eingeschaltet ist, stellt sie einen bipolaren Kurzschluss dar. Die offene Halbleiterbrücke, welche durch die Leistungshalbleiter $L_1$ und $L_2$ gebildet ist, bildet mit ihren Freilaufdioden $D_{F1}$, $D_{F2}$ einen Spannungsverdoppler. Während die zum Resonanzkreis parallelgeschaltete Freilaufdiode $DF_2$ leitend ist, wird der Reihenkondensator $C_2$ auf die Scheitelspannung aufgeladen. Wenn die andere Freilaufdiode $DF_1$ leitet, wird die Summe aus der Reihenkondensatorspannung und der Scheitelspannung der nächsten Halbwelle auf den Ausgangskondensator geschaltet. Die Leistungshalbleiter werden so mit der Netzfrequenz aktiv geschaltet, so dass keine nennenswerten Schaltverluste entstehen. Eine Synchronisierung mit der Resonanzfrequenz ermöglicht ein spannungsloses Schalten und so eine weitere Optimierung des Wirkungsgrades.

Das untere Ersatzschaltbild der Figur 3c zeigt die Schaltung, welche sich ergibt, wenn während der negativen Halbwelle der Einhüllenden EH die Leistungshalbleiter $L_1$ und $L_2$ mittels des Gruppensteuersignals G1 leitend geschaltet sind. Während die durch die Gruppe $Gr_1$ gebildete Halbleiterbrücke eingeschaltet ist, stellt sie einen bipolaren Kurzschluss dar. Die offene Halbleiterbrücke, welche durch die Leistungshalbleiter $L_3$ und $L_4$ gebildet ist, bildet mit ihren Freilaufdioden $D_{F3}$, $D_{F4}$ einen Spannungsverdoppler. Während die zum Resonanzkreis parallelgeschaltete Freilaufdiode $DF_3$ leitend ist, wird der Reihenkondensator $C_2$ auf die Scheitelspannung aufgeladen. Wenn die andere Freilaufdiode $DF_4$ leitet, wird die Summe aus der Reihenkondensatorspannung und der Scheitelspannung der nächsten Halbwelle auf den Ausgangskondensator geschaltet.

Bei einer Abwandlung der Ansteuerung der in Figur 3a dargestellten Schaltung können die Leistungshalbleiter einer Gruppe $Gr_i$ unabhängig voneinander aktiv bzw. inaktiv geschaltet werden. Hierdurch ist ein Hochsetzen der Ausgangsspannung möglich. Dies erfolgt durch Kurzschließen der Sekundärspannung über die zwei Leistungshalbleiter $L_2$ und $L_3$. Hierdurch wird der Sekundärschwingkreis mit Energie geladen. Nach dem Öffnen der Leistungshalbleiter $L_2$ und $L_3$ kann die in dem sekundären Schwingkreis gespeicherte Energie über die Freilaufdioden auf den Ausgangskondensator $C_A$ freilaufen. Dies ist vorteilhaft im Falle eines variablen Luftspaltes zwischen Primär- und Sekundärkreis bzw. einer nicht konstanten Amplitude der induzierten Spannung $U_i$ im Sekundärkreis.

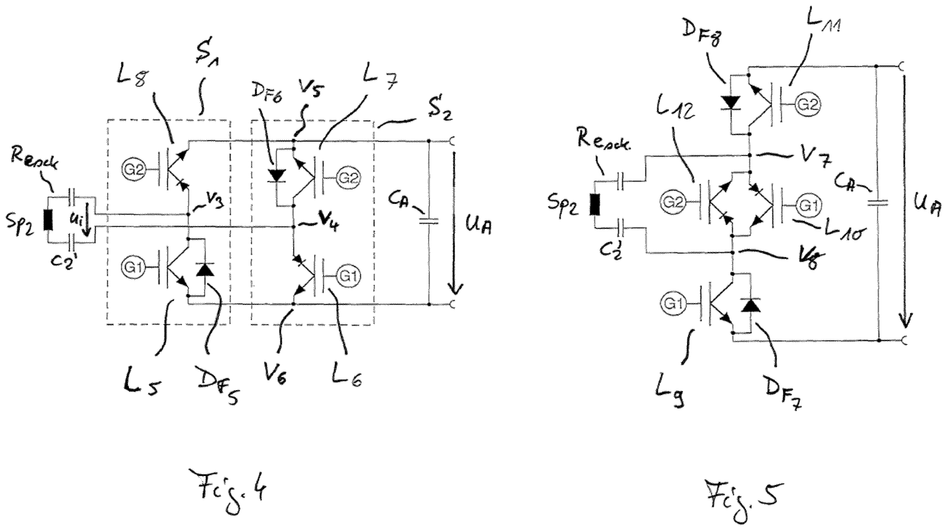

Für die in den Figuren 3a bis 3c dargestellte und erläuterte Schaltung können vorteilhaft IGBTs, MOSFETs, etc. als rückwärts leitende Halbleiter eingesetzt werden. Es kann evtl. nachteilig sein, dass in einem Strompfad stets drei Leistungshalbleiter sind. Um die damit einhergehenden Durchlassverluste weiter zu minimieren, können die Schaltungen gemäß der Figuren 4 und 5 verwendet werden, welche rückwärts sperrende Leistungshalbleiter verwenden.

Die in Figur 4 dargestellte Schaltung verwendet je Gruppe $Gr_1$ bzw. $Gr_2$ jeweils einen rückwärts leitenden Leistungshalbleiter (IGBT) $L_5$, $L_7$ und einen rückwärts sperrenden Leistungshalbleiter (reverse blocking IGBT) $L_6$, $L_8$. Die rückwärts sperrenden Leistungshalbleiter verhalten sich im offenen Zustand wie ein bipolarer Leerlauf und im eingeschalteten Zustand wie eine Diode. Durch ein "high"-Gatesignal sind die rückwärts sperrenden Leistungshalbleiter $L_6$, $L_8$ eingeschaltet, d.h. im leitenden Zustand, wobei in diesem Zustand dessen rückwärts sperrende Diode gleichrichtend wirkt. Der rückwärts sperrende Leistungshalbleiter $L_6$, $L_8$ ist somit im Sinne der Erfindung "aktiv", wenn er eingeschaltet ist. Die rückwärts leitenden Leistungshalbleiter $L_5$, $L_7$ sind dagegen im Sinne der Erfindung "aktiv" wenn sie ausgeschaltet, d.h. deren Gatsignal "low" ist. Parallel zu den rückwärts leitenden Leistungshalbleitern muss jeweils noch eine Freilaufdiode $D_{F5}$ bzw. $D_{F6}$ parallel geschaltet werden, sofern sie nicht bereits im Leistungshalbleiter implementiert ist. Sofern die Leistungshalbleiter $L_5$, $L_6$ bzw. $L_7$, $L_8$ jeder Gruppe $Gr_1$ bzw. $Gr_2$ über die in Figur 3b dargestellten Gruppensteuersignale G1 und G2 angesteuert werden, ist die Funktion die gleiche wie die der in den Figuren 3a bis 3c beschriebenen Schaltung, mit dem einzigen Unterschied, dass sich die Anzahl der Leistungshalbleiter im Strompfad auf zwei reduziert. Hierdurch sinken die Durchlassverluste und es wird ein besserer Wirkungsgrad erzielt. Bei der in Figur 4 dargestellten Schaltung ist jedoch schaltungsbedingt eine getrennte und unterschiedliche Ansteuerung der Leistungshalbleiter einer Gruppe zwecks Hochstellen der Ausgangsspannung nicht möglich, da kein bipolarer Kurzschluss des Sekundärkreises möglich ist.

Die in Figur 5 dargestellte Schaltung, welche ebenfalls je Gruppe $Gr_1$ bzw. $Gr_2$ einen rückwärts leitenden Leistungshalbleiter $L_9$, $L_{11}$ und einen rückwärts sperrenden Leistungshalbleiter $L_{10}$, $L_{12}$ verwendet, wobei ebenfalls Freilaufdioden $D_{F7}$, $D_{F8}$ parallel zu den rückwärts leitenden Leistungshalbleitern $L_9$, $L_{11}$ geschaltet sind, ermöglich einen Kurzschluss des sekundärseitigen Reihenschwingkreises $Re_{sek}$, wodurch das Hochsetzen der Ausgangsspannung $U_A$ möglich ist und lediglich zwei Leistungshalbleiter in einem Strompfad sind. Die in Figur 5 dargestellte Schaltung verbindet somit die Vorteile der in den Figuren 3 und 4 gezeigten Schaltungen.

Die Ersatzschaltbilder der Figur 3c gelten genauso für die Schaltungen der Figuren 4 und 5.

## Patentansprüche

1.    Induktives Energieübertragungssystem, mindestens eine Primärspule ($Sp_1$) und mindestens eine Sekundärspule ($Sp_2$) aufweisend, die miteinander magnetisch gekoppelt oder koppelbar sind und die jeweils mit mindestens einer Kapazität ($C_1$, $C_2$) einen primärseitigen und sekundärseitigen Resonanzkreis ($Re_{pri}$, $Re_{sek}$) bilden, wobei ein primärseitiger Wechselrichter (15) aus einer unipolaren Primärspannung ($|U_N|$) oder einer Gleichspannung ($U_G$) eine getaktete Spannung ($U_w$), insbesondere eine getaktete Rechteckspannung, erzeugt und dem primärseitigen Resonanzkreis ($Re_{pri}$) zuführt, **dadurch gekennzeichnet, dass** der primärseitige Wechselrichter (15) derart getaktet oder eingeregelt ist oder die Taktung der vom primärseitigen Wechselrichter (15) erzeugte Spannung, insbesondere Rechteckspannung, derart gewählt oder eingeregelt ist, dass sich bei magnetisch gekoppelter Primärspule ($Sp_1$) und Sekundärspule ($Sp_2$) eine im sekundärseitigen Resonanzkreis ($Re_{sek}$) induzierte Sekundärwechselspannung ($U_i$) mit einer Trägerfrequenz ($f_T$) ergibt, wobei die Amplitude der Sekundärwechselspannung ($U_i$) mit einer Netzfrequenz ($f_0$) oszilliert, und dass dem sekundärseitigen Resonanzkreis ($Re_{sek}$) eine Einrichtung (E) nachgeschaltet ist, die aus der am Ausgang des sekundärseitigen Resonanzkreises ($Re_{sek}$) anliegenden Spannung ($U_i$) eine bipolare sekundärseitige Ausgangsspannung ($U_A$) erzeugt, wobei die Frequenz ($f_A$) der sekundärseitigen Ausgangsspannung ($U_A$) gleich der Netzfrequenz ($f_0$) ist, und dass die Einrichtung (E) vier Leistungshalbleiter ($L_1$, $L_2$, $L_3$, $L_4$;) aufweist, die zwei Gruppen ($Gr_1$; $Gr_2$) von insbesondere gleich vielen Leistungshalbleitern bilden, und die Leistungshalbleiter einer Gruppe ($Gr_1$; $Gr_2$) zusammen mittels eines Gruppensteuersignals ($G_1$; $G_2$) geschaltet werden, wobei die Gruppen ($Gr_1$, $Gr_2$) abwechselnd mittels der Gruppensteuersignale ($G_1$; $G_2$) aktiv geschaltet sind, wobei die Einrichtung (E) vier rückwärts leitende Leistungshalbleiter ($L_1$ - $L_4$) aufweist, die zwei Gruppen ($Gr_1$; $Gr_2$) je zwei Leistungshalbleiter ($L_1$, $L_2$; $L_3$, $L_4$) bilden, wobei die Leistungshalbleiter ($L_1$, $L_2$; $L_3$, $L_4$) jeder Gruppe ($Gr_1$, $Gr_2$) in Reihe geschaltet sind und mittels des gleichen Gruppensteuersignals ($G_1$; $G_2$) aktiv geschaltet werden, wobei die Anode des einen und die Kathode des anderen Leistungshalbleiters ($L_1$, $L_2$) der einen ersten Gruppe ($Gr_1$) in einem ersten Verbindungspunkt ($V_1$) miteinander elektrisch verbunden sind und die Anode des einen und die Kathode des anderen Leistungshalbleiters ($L_3$, $L_4$) der anderen zweiten Gruppe ($Gr_2$) in einem zweiten Verbindungspunkt ($V_2$) miteinander elektrisch verbunden sind, und die Verbindungspunkte ($V_1$, $V_2$) die Anschlusspunkte für den sekundärseitigen Resonanzkreis ($Re_{sek}$) bilden, und sofern im Leistungshalbleiter selbst keine Freilaufdiode implementiert ist jedem Leistungshalbleiter ($L_1$, $L_2$; $L_3$, $L_4$) jeweils eine Freilaufdiode ($D_F$) parallel geschaltet ist, und dass die beiden Gruppen ($Gr_1$, $Gr_2$) mit den freien Anoden ihres einen Leistungshalbleiters ($L_2$, $L_4$) im Punkt ($P_1$) miteinander in Verbindung und damit in Reihe geschaltet sind, und dass parallel zur Reihenschaltung der beiden Gruppen ($Gr_1$, $Gr_2$) mindestens ein Kondensator ($C_A$) parallel geschaltet ist und die Ausgangsspannung ($U_A$) an dem Kondensator ($C_A$) anliegt.

2. Induktives Energieübertragungssystem nach Anspruch 1,
   **dadurch gekennzeichnet, dass** primärseitig ein erster Gleichrichter (11) eine Wechselspannung ($U_N$) mit einer Netzfrequenz ($f_0$) in eine unipolare Primärspannung ($|U_N|$) gleichrichtet, die eingangsseitig am primärseitigen Wechselrichter (15) anliegt.

3. Induktives Energieübertragungssystem nach Anspruch 1 oder 2,
   **dadurch gekennzeichnet, dass** die Einrichtung (E) insbesondere vier Leistungshalbleiter ($L_1$, $L_2$, $L_3$, $L_4$; $L_9$, $L_{10}$, $L_{11}$, $L_{12}$) aufweist, die zwei Gruppen ($Gr_1$; $Gr_2$) von insbesondere gleich vielen Leistungshalbleitern bilden, und die Leistungshalbleiter einer Gruppe ($Gr_1$; $Gr_2$) entweder zusammen mittels eines Gruppensteuersignals ($G_1$; $G_2$) geschaltet werden, wobei die Gruppen ($Gr_1$, $Gr_2$) abwechselnd mittels der Gruppensteuersignale ($G_1$; $G_2$) aktiv geschaltet sind, oder mittels getrennter Gruppensteuersignale geschaltet werden, damit der sekundäre Reihenschwingkreis ($Re_{sek}$) kurzschließbar ist und damit ein Hochsetzen der Ausgangsspannung ($U_A$) möglich ist.

4. Induktives Energieübertragungssystem nach einem der Ansprüche 1 bis 3, **dadurch gekennzeichnet, dass** jeweils nur eine Gruppe ($Gr_1$, $Gr_2$) von Leistungshalbleitern aktiv geschaltet ist und zwischen den aktiven Phasen der Gruppen eine Totzeit ($T_{tot}$) besteht, in der beide Gruppen ($Gr_1$, $Gr_2$) inaktiv sind.

5. Induktives Energieübertragungssystem nach dem Oberbegriff des Anspruchs wobei der primärseitige Wechselrichter (15) derart getaktet oder eingeregelt ist oder die Taktung der vom primärseitigen Wechselrichter (15) erzeugte Spannung, insbesondere Rechteckspannung, derart gewählt oder eingeregelt ist, dass sich bei magnetisch gekoppelter Primärspule ($Sp_1$) und Sekundärspule ($Sp_2$) eine im sekundärseitigen Resonanzkreis ($Re_{sek}$) induzierte Sekundärwechselspannung ($U_i$) mit einer Trägerfrequenz ($f_T$) ergibt, wobei die Amplitude der Sekundärwechselspannung ($U_i$) mit einer Netzfrequenz ($f_0$) oszilliert, und dass dem sekundärseitigen Resonanzkreis ($Re_{sek}$) eine Einrichtung (E) nachgeschaltet ist, die aus der am Ausgang des sekundärseitigen Resonanzkreises ($Re_{sek}$) anliegenden Spannung ($U_i$) eine bipolare sekundärseitige Ausgangsspannung ($U_A$) erzeugt, wobei die Frequenz ($f_A$) der sekundärseitigen Ausgangsspannung ($U_A$) gleich der Netzfrequenz ($f_0$) ist, und dass die Einrichtung (E) vier Leistungshalbleiter ($L_5$, $L_6$, $L_7$, $L_8$; $L_9$, $L_{10}$, $L_{11}$, $L_{12}$) aufweist, die zwei Gruppen ($Gr_1$; $Gr_2$) von insbesondere gleich vielen Leistungshalbleitern bilden, und die Leistungshalbleiter einer Gruppe ($Gr_1$; $Gr_2$) zusammen mittels eines Gruppensteuersignals ($G_1$; $G_2$) geschaltet werden, wobei die Gruppen ($Gr_1$, $Gr_2$) abwechselnd mittels der Gruppensteuersignale ($G_1$; $G_2$) aktiv geschaltet sind, **dadurch gekennzeichnet, dass** jede Gruppe ($Gr_1$; $Gr_2$) aus jeweils einem rückwärts leitenden Leistungshalbleiter ($L_5$, $L_7$; $L_9$, $L_{11}$), insbesondere rückwärts leitendem IGBT oder MOSFET, und einem rückwärts sperrenden Leistungshalbleiter ($L_6$, $L_8$; $L_{10}$, $L_{12}$), insbesondere rückwärts sperrendem IGBT bzw. MOSFET, gebildet ist, wobei entweder

der rückwärts leitende Leistungshalbleiter ($L_5$) der ersten Gruppe ($Gr_1$) und der rückwärts sperrende Leistungshalbleiter ($L_8$) der zweiten Gruppe ($Gr_2$) mit ihren Anoden in dem Verbindungspunkt ($V_3$) miteinander elektrisch verbunden sind und eine erste Reihenschaltung ($S_1$) bilden, und dass der rückwärts sperrende Leistungshalbleiter ($L_6$) der ersten Gruppe ($Gr_1$) und der rückwärts leitende Leistungshalbleiter ($L_7$) der zweiten Gruppe ($Gr_2$) mit ihren Anoden in dem Verbindungspunkt ($V_4$) miteinander elektrisch verbunden sind und eine zweite Reihenschaltung ($S_2$) bilden, und sofern im rückwärtsleitendem Leistungshalbleiter selbst keine Freilaufdiode implementiert ist dem rückwärts leitenden Leistungshalbleitern ($L_5$, $L_7$) jeweils eine Freilaufdiode ($D_F$) parallel geschaltet ist, und dass die Reihenschaltungen ($S_1$, $S_2$) parallel zum Ausgangskondensator ($C_A$) geschaltet sind, und die Verbindungspunkte ($V_3$, $V_4$) die Anschlusspunkte für den sekundärseitigen Resonanzkreis ($Re_{sek}$) bilden, oder

die Leistungshalbleiter ($L_9$, $L_{10}$; $L_{11}$, $L_{12}$) jeder Gruppe ($Gr_1$, $Gr_2$) in Reihe geschaltet sind und mittels des gleichen Gruppensteuersignals ($G_1$; $G_2$) aktiv geschaltet werden, wobei die Anode des einen und die Kathode des anderen Leistungshalbleiters ($L_9$, $L_{10}$) der einen ersten Gruppe ($Gr_1$) in einem ersten Verbindungspunkt ($V_1$) miteinander elektrisch verbunden sind und die Anode des einen und die Kathode des anderen Leistungshalbleiters ($L_3$, $L_4$) der anderen zweiten Gruppe ($Gr_2$) in einem zweiten Verbindungspunkt ($V_2$) miteinander verbunden sind, und die Verbindungspunkte ($V_1$, $V_2$) die Anschlusspunkte für den sekundärseitigen Resonanzkreis ($Re_{sek}$) bilden, und dass den rückwärts leitenden Leistungshalbleitern ($L_9$, $L_{11}$) jeweils Freilaufdioden ($D_F$) parallel geschaltet sind, sofern Freilaufdioden nicht bereits im rückwärts leitenden Leistungshalbleitern ($L_9$, $L_{11}$) implementiert sind, wobei die Anode des rückwärts sperrenden Leistungshalbleiters ($L_{10}$) der ersten Gruppe ($Gr_1$) mit der Kathode des rückwärts sperrenden Leistungshalbleiters ($L_{12}$) der zweiten Gruppe ($Gr_2$) elektrisch leitend verbunden ist und die Kathode des rückwärts sperrenden Leistungshalbleiters ($L_{10}$) der ersten Gruppe ($Gr_1$) mit der Anode des rückwärts sperrenden Leistungshalbleiters ($L_{12}$) der zweiten Gruppe ($Gr_2$) elektrisch leitend verbunden ist und die Kathoden der rückwärts leitenden Leistungshalbleiter ($L_9$, $L_{11}$) mit den Anschlüssen des Ausgangskondensators ($C_A$) verbunden sind.

6. Induktives Energieübertragungssystem nach einem der Ansprüche 1 bis 5, **dadurch gekennzeiehnet**, dass eine Steuereinrichtung die Leistungshalbleiter der Gruppen ($Gr_1$; $Gr_2$) mittels der Gruppensteuersignale ($G_1$, $G_2$) abwechselnd nach jedem lokalen Minimum der Einhüllenden (EH) der Sekundärspannung ($U_A$) aktiv schaltet.

7. Induktives Energieübertragungssystem nach Anspruch 6,
**dadurch gekennzeichnet, dass** vor dem AktivSchalten der nächsten Gruppe beide Gruppen ($Gr_1$, $Gr_2$) von Leistungshalbleitern während einer Totzeit ($T_{tot}$) inaktiv sind.

8. Induktives Energieübertragungssystem nach einem der vorhergehenden Ansprüche, **dadurch gekennzeichnet, dass** die Umpoleinrichtung in den sekundärseitigen zweiten Gleichrichter integriert oder Bestandteil von diesem ist.

9. Induktives Energieübertragungssystem nach einem der vorherigen Ansprüche, **dadurch gekennzeichnet, dass** die Taktfrequenz des Wechselrichters (15) konstant oder an die Resonanzfrequenz des primärseitigen Resonanzkreises ($Re_{pri}$) angepasst oder auf diese eingeregelt ist.

10. Induktives Energieübertragungssystem nach einem der vorhergehenden Ansprüche, **dadurch gekennzeichnet, dass** die Blindspannungsanteile der mindestens einen Primär- und mindestens einen Sekundärspule ($Sp_1$, $Sp_2$) mittels Kapazitäten kompensiert sind.

11. Induktives Energieübertragungssystem nach einem der vorhergehenden Ansprüche, **dadurch gekennzeichnet, dass** ein primärseitiger Glättungskondensator (12), der insbesondere eine kleine Kapazität aufweist, die unipolare Primärspannung ($|U_N|$) glättet.

12. Induktives Energieübertragungssystem nach einem der vorhergehenden Ansprüche, **dadurch gekennzeichnet, dass** die sekundärseitige Ausgangsspannung ($U_A$) die Form einer einphasigen Wechselspannung besitzt, deren Amplitude proportional zum magnetischen Fluss in der Sekundärspule ($Sp_2$) ist.

13. Induktives Energieübertragungssystem nach einem der vorhergehenden Ansprüche, **dadurch gekennzeichnet, dass** der Wechselrichter (15) den durch die Primärspule fließenden Primärstrom in Abhängigkeit von der geforderten Amplitude der sekundärseitigen Ausgangsspannung ($U_A$) einstellt oder einregelt.

14. Induktives Energieübertragungssystem nach einem der vorhergehenden Ansprüche, **dadurch gekennzeichnet, dass** der Wechselrichter (15) den durch die Primärspule fließenden Primärstrom so eingeregelt, dass die Amplitude der sekundärseitigen Ausgangsspannung der Amplitudenverlauf bzw. dessen Einhüllende (EH) einer einphasigen Wechselspannung entspricht.

**15.** Induktives Energieübertragungssystem nach Anspruch 13 oder 14, **dadurch gekennzeichnet, dass** eine Messeinrichtung die Amplitude der sekundärseitigen Ausgangsspannung ($U_A$) ermittelt und ein entsprechendes Signal an den Wechselrichter (15) übermittelt.

**16.** Induktives Energieübertragungssystem nach einem der vorhergehenden Ansprüche, **dadurch gekennzeichnet, dass** die Frequenz ($f_T$) Sekundärwechselspannung im kHz-Bereich, insbesondere zwischen 10 kHz und 150 kHz, liegt.

**17.** Induktives Energieübertragungssystem nach einem der vorhergehenden Ansprüche, **dadurch gekennzeichnet, dass** die Sekundärwechselspannung gleich oder annähernd

$$u_{sek}(t) = \hat{u}_{sek} * \sin(2*\Pi*f_T*t) * \sin(2*\Pi*f_0*t)$$

ist.

**18.** Induktives Energieübertragungssystem nach einem der vorhergehenden Ansprüche, **dadurch gekennzeichnet, dass** der primärseitige Wechselrichter (15) mittels konstantem Takt, mittels PWM oder Wellentaktung getaktet ist.

**Claims**

**1.** An inductive power transmission system, comprising at least one primary coil ($Sp_1$) and at least one secondary coil ($Sp_2$), which are or can be magnetically coupled to each other and which form respective primary-side and secondary-side resonant circuits ($Re_{pri}$, $Re_{sek}$) together with at least one capacitance ($C_1$, $C_2$), wherein a primary-side inverter (15) produces a clocked voltage ($U_w$), in particular a clocked square-wave voltage, from a unipolar primary voltage ($|U_N|$) or a direct voltage ($U_G$) and feeds said clocked voltage to the primary-side resonant circuit ($Re_{pri}$), **characterised in that** the primary-side inverter (15) is clocked or adjusted in such a way or the clocking of the voltage, in particular square-wave voltage, produced by the primary-side inverter (15) is selected or adjusted in such a way that in the case of magnetic coupling of the primary coil ($Sp_1$) and the secondary coil ($Sp_2$) a secondary alternating voltage ($U_i$) having a carrier frequency ($f_T$) and induced in the secondary-side resonant circuit ($Re_{sek}$) results, wherein the amplitude of the secondary alternating voltage ($U_i$) oscillates at a network frequency ($f_0$), and an apparatus (E) is connected downstream of the secondary-side resonant circuit ($Re_{sek}$), which apparatus produces a bipolar secondary-side output voltage ($U_A$) from the voltage ($U_i$) present at the output of the secondary-side resonant circuit ($Re_{sek}$), wherein the frequency ($f_A$) of the secondary-side output voltage ($U_A$) is equal to the network frequency ($f_0$), and **characterized in that** the apparatus (E) has in particular four power semiconductors ($L_1$, $L_2$, $L_3$, $L_4$) which form two groups ($Gr_1$; $Gr_2$) of in particular equally many power semiconductors, and the power semiconductors of a group ($Gr_1$; $Gr_2$) are switched jointly by means of a group control signal ($G_1$; $G_2$), wherein the groups ($Gr_1$, $Gr_2$) are switched to an active state in alternation by means of the group control signals ($G_1$; $G_2$), wherein the apparatus (E) has four reverse conducting semiconductors ($L_1$ - $L_4$) which form two groups ($Gr_1$; $Gr_2$) of two power semiconductors each ($L_1$, $L_2$; $L_3$, $L_4$), wherein the power semiconductors ($L_1$, $L_2$; $L_3$, $L_4$) of each group ($Gr_1$; $Gr_2$) are connected in series and are switched to an active state by means of the same group control signals ($G_1$; $G_2$), wherein the anode of one and the cathode of the other semiconductor ($L_1$, $L_2$) of the one first group ($Gr_1$) are electrically connected with each other at a first connection point ($V_1$) and the anode of one and the cathode of the other semiconductor ($L_3$, $L_4$) of the other second group ($Gr_2$) are electrically connected with each other at a second connection point ($V_2$), and the connection points ($V_1$, $V_2$), form the attachment points for the secondary-side resonant circuit ($Re_{sek}$), and wherein the power semiconductor itself no free-wheeling diode is implemented each power semiconductor ($L_1$, $L_2$; $L_3$, $L_4$) has a free-wheeling diode ($D_F$) connected in parallel in each case, and the two groups ($Gr_1$, $Gr_2$) with the free anodes of their one power semiconductor ($L_2$, $L_4$) are connected with each other in series in point ($P_1$), and thus in series, and parallel to the series connection of the two groups ($Gr_1$, $Gr_2$) at least one capacitor ($C_A$) is connected in parallel and the output voltage ($U_A$) is applied to the capacitor ($C_A$).

**2.** The inductive power transmission system of claim 1, **characterised in that** on the primary side a first inverter (11) inverts an alternating voltage ($U_N$) with a mains frequency ($f_o$) into a unipolar primary-side voltage ($|U_N|$), which is applied on the input side of the primary-side inverter (15).

3. The inductive power transmission system of claim 1 or 2, **characterised in that** the apparatus (E) has in particular four power semiconductors ($L_1$, $L_2$, $L_3$, $L_4$; $L_9$, $L_{10}$, $L_{11}$, $L_{12}$), which form two groups ($Gr_1$; $Gr_2$) of in particular equally many power semiconductors, and the power semiconductors of a group ($GR_1$, $Gr_2$) are either switched together by means of a group control signal ($G_1$; $G_2$), wherein the groups ($Gr_1$, $Gr_2$) are switched to an active state in alternation by means of the group control signals ($G_1$; $G_2$), or switched by separate group- control signals, so that the secondary-side resonant circuit ($Re_{sek}$) can be shortcircuited and thus the output voltage ($U_A$) can be increased.

4. The inductive power transmission system of one of claim 1 to 3, **characterised in that** in each case only one group ($Gr_1$, $Gr_2$) of power semiconductors is switched to an active state and between the active phases of the groups there is a downtime ($T_{tot}$) in which both groups ($Gr_1$, $Gr_2$) are inactive.

5. The inductive power transmission system of the preamble to claim 1, wherein the primary-side inverter (15) is clocked or adjusted in such a way or the clocking of the voltage, in particular square-wave voltage, produced by the primary-side inverter (15) is selected or adjusted in such a way that in the case of magnetic coupling of the primary coil ($Sp_1$) and the secondary coil ($Sp_2$) a secondary alternating voltage ($U_i$) having a carrier frequency ($f_T$) and induced in the secondary-side resonant circuit ($Re_{sek}$) results, wherein the amplitude of the secondary alternating voltage ($U_i$) oscillates at a network frequency ($f_0$), and an apparatus (E) is connected downstream of the secondary-side resonant circuit ($Re_{sek}$), which apparatus produces a bipolar secondary-side output voltage ($U_A$) from the voltage ($U_i$) present at the output of the secondary-side resonant circuit ($Re_{sek}$), wherein the frequency ($f_A$) of the secondary-side output voltage ($U_A$) is equal to the network frequency ($f_0$), and **characterized in that** the apparatus (E) has in particular four power semiconductors ($L_5$, $L_6$, $L_7$, $L_8$; $L_9$, $L_{10}$, $L_{11}$, $L_{12}$) which form two groups ($Gr_1$; $Gr_2$) of in particular equally many power semiconductors, and the power semiconductors of a group ($Gr_1$; $Gr_2$) are switched jointly by means of a group control signal ($G_1$; $G_2$), wherein the groups ($Gr_1$, $Gr_2$) are switched to an active state in alternation by means of the group control signals ($G_1$; $G_2$), **characterised in that** each group ($G_1$; $G_2$) is formed in each case by a reverse conducting semiconductor ($L_5$, $L_7$; $L_9$, $L_{11}$), in particular a reverse conducting IGBT or MOSFET, and a reverse blocking power semiconductor ($L_6$, $L_8$; $L_{10}$, $L_{12}$), in particular a reverse blocking IGBT or MOSFET, wherein either the reverse conducting semiconductor ($L_5$) of the first group ($Gr_1$) and the reverse blocking semiconductor of the ($L_8$) of the second group are electrically connected to each other with their anodes in the connection point ($V_3$) and form a first series connection ($S_1$), and **in that** the reverse blocking power semiconductor ($L_6$) of the first group ($Gr_1$) and the reverse blocking power semiconductor ($L_7$) of the second group ($Gr_2$) are connected to each other with their anodes in the connection point ($V_4$) and form a second series connection ($S_2$) and where in the reverse blocking power semiconductor itself no free-wheeling diode is implemented in each case a free-wheeling diode ($D_F$) is connected in parallel with the reverse blocking power semiconductors ($L_5$, $L_7$), and **in that** the series connections ($S_1$, $S_2$) are connected in parallel to the output capacitor ($C_A$), and the connection points ($V_3$, $V_4$) form the attachment points for the secondary-side resonant circuit ($Re_{sek}$) or the power semiconductors ($L_9$, $L_{10}$, $L_{11}$, $L_{12}$) of each group ($Gr_1$, $Gr_2$) are connected in series and are switched to an active state by means of the same group control signals ($G_1$; $G_2$), wherein the anode of one and the cathode of the other semiconductor ($L_9$, $L_{10}$) of the one first group ($Gr_1$) are electrically connected with each other at a connection point ($V_1$) and the anode of the one and the cathode of the other semiconductor ($L_3$, $L_4$) of the other second group ($Gr_2$) are electrically connected with each other at a connection point ($V_2$), and the connection points ($V_1$, $V_2$), form the attachment points for the secondary-side resonant circuit ($Re_{sek}$), and **in that** the reverse conducting power semiconductors ($L_9$, $L_{11}$) in each case have a free-wheeling diode ($D_F$) connected in parallel with them, where free-wheeling diodes are not already implemented in the reverse conducting power semiconductors ($L_9$, $L_{11}$), wherein the anode of the reverse blocking power semiconductor ($L_{10}$) of the first group ($Gr_1$) is connected in an electrically conducting manner with the cathode of the reverse blocking power semiconductor ($L_{12}$) of the second group ($Gr_2$) and the cathode of the reverse blocking power semiconductor ($L_{10}$) of the first group ($Gr_1$) is connected in an electrically conducting manner with the anode of the reverse blocking power semiconductor ($L_{12}$) of the second group ($Gr_2$) and the cathodes of the reverse conducting power semiconductors ($L_9$, $L_{11}$) are connected with the ports of the output capacitor ($C_A$).

6. The inductive power transmission system of one of claim 1 to 5, **characterised in that** a control device switches the semiconductors of the groups ($Gr_1$; $Gr_2$) to an active state in alternation by means of the group control signals ($G_1$; $G_2$) after each local minimum of the enveloping (EH) of the secondary voltage ($U_A$).

7. The inductive power transmission system of claim 6, **characterised in that** before the next group is switched to an active state both groups ($Gr_1$, $Gr_2$) of power semiconductors are inactive for a downtime ($T_{tot}$).

8. The inductive power transmission system of one of the above claims, **characterised in that** the pole reversal apparatus is integrated into the second-side inverter or is a component of this.

9. The inductive power transmission system of one of the above claims, **characterised in that** the clocking frequency of the inverter (15) is constant or adapted to the resonant frequency of the primary-side resonant circuit ($\text{Re}_{\text{pri}}$) or adjusted on the basis of this.

10. The inductive power transmission system of one of the above claims, **characterised in that** the reactive voltage of the at least one primary and at least one secondary coil ($\text{Sp}_1$, $\text{Sp}_2$) are compensated by means of capacitors.

11. The inductive power transmission system of one of the above claims, **characterised in that** a primary-side smoothing capacitor (12), which in particular has a low capacitance, smooths the unipolar primary voltage ($|U_N|$).

12. The inductive power transmission system of one of the above claims, **characterised in that** the secondary-side output voltage ($U_A$) has the shape of a single-phase alternating voltage, the amplitude of which is proportional to the magnetic flow in the secondary coil ($\text{Sp}_2$).

13. The inductive power transmission system of one of the above claims, **characterised in that** the inverter (15) adjusts or regulates the primary current flowing through the primary coil as a function of the required amplitude of the secondary-side output voltage ($U_A$).

14. The inductive power transmission system of one of the above claims, **characterised in that** the inverter (15) regulates the primary current flowing through the primary coil in such a way that the amplitude of the secondary-side output voltage corresponds to the amplitude curve or its envelope (EH) of a single-phase alternating voltage.

15. The inductive power transmission system either claim 13 or 14, **characterised in that** a measuring apparatus determines the amplitude of the secondary-side output voltage ($U_A$) and sends a corresponding signal to the inverter (15).

16. The inductive power transmission system of one of the above claims, **characterised in that** the frequency ($f_T$) of the secondary alternating voltage is in the kHz range, in particular between 10 kHz and 150 kHz.

17. The inductive power transmission system of one of the above claims, **characterised in that** the secondary alternating voltage is equal to or approximately

$$U_{sek}(t) = \hat{U}sek * \sin(2*\pi*f_T*t) * \sin(2*\pi*f_0*t).$$

18. The inductive power transmission system of one of the above claims, **characterised in that** the primary-side inverter (15) is clocked by means of constant clocking, by means of PWM or wave clocking.

**Revendications**

1. Système de transfert d'énergie par induction comportant au moins une bobine primaire ($\text{Sp}_1$) et au moins une bobine secondaire ($\text{Sp}_2$) qui sont ou peuvent être magnétiquement couplées l'une à l'autre et qui forment chacune, avec au moins une capacité ($C_1$, $C_2$), un circuit résonnant côté primaire et un circuit résonnant côté secondaire ($\text{Re}_{\text{pri}}$, $\text{Re}_{\text{sek}}$), dans lequel un onduleur côté primaire (15) génère, à partir d'une tension primaire unipolaire ($|U_N|$) ou d'une tension continue ($U_G$), une tension d'horloge ($U_w$), notamment une tension carrée d'horloge, et la transmet au circuit résonnant primaire ($\text{Re}_{\text{pri}}$), **caractérisé en ce que** l'onduleur côté primaire (15) est cadencé ou réglé de telle sorte, ou bien le cadençage de la tension générée par l'onduleur côté primaire (15), notamment de la tension carrée, est sélectionné ou réglé de telle sorte que, lors d'une bobine primaire ($\text{Sp}_1$) et d'une bobine secondaire ($\text{Sp}_2$) couplées magnétiquement, une tension alternative secondaire ($U_i$,) induite dans le circuit résonnant côté secondaire ($\text{Re}_{\text{sek}}$) et présentant une fréquence porteuse ($f_T$) est créée, où l'amplitude de la tension alternative secondaire ($U_i$) oscille à une fréquence de réseau ($f_0$) et qu'en aval du circuit résonnant côté secondaire ($\text{Re}_{\text{sek}}$) est monté un dispositif (E) qui génère une tension de sortie côté secondaire bipolaire ($U_A$) à partir de la tension ($U_i$) qui se trouve à la sortie du circuit résonnant côté secondaire ($\text{Re}_{\text{sek}}$), où la fréquence ($f_A$) de la tension de sortie côté secondaire ($U_A$) est égale à la fréquence de réseau ($f_0$) et que le dispositif (E) présente notamment quatre semi-conducteurs de puissance ($L_1$, $L_2$, $L_3$, $L_4$ ;) qui forment deux groupes ($Gr_1$; $Gr_2$) présentant notamment le même nombre de semi-conducteurs de puissance, et les semi-conducteurs de puissance d'un groupe ($Gr_1$; $Gr_2$) sont commutés ensemble au moyen d'un signal de commande de groupe ($G_1$; $G_2$), les groupes ($Gr_1$, $Gr_2$) étant activés en alternance au moyen des signaux de commande de groupe ($G_1$; $G_2$), où le dispositif (E) présente quatre semi-conducteurs de puissance à conduction inverse ($L_1$ - $L_4$) qui forment deux groupes ($Gr_1$, $Gr_2$) de deux semi-conducteurs de puissance chacun ($L_1$, $L_2$; $L_3$, $L_4$), où les semi-conducteurs de puissance ($L_1$, $L_2$; $L_3$, $L_4$) de chaque groupe ($Gr_1$, $Gr_2$) sont connectés en série et sont activés au moyen du même signal de commande de groupe ($Gr_1$, $Gr_2$), où l'anode de l'un et la cathode de l'autre semi-conducteur de puissance ($L_1$, $L_2$) d'un premier groupe ($Gr_1$) sont mutuellement reliés de manière électrique dans un premier point de connexion ($V_1$) et l'anode de l'un et la cathode de l'autre semi-conducteur de puissance ($L_3$, $L_4$) de l'autre deuxième groupe ($Gr_2$) sont mutuellement reliés de manière électrique dans un deuxième point de connexion ($V_2$), et les points de connexion ($V_1$, $V_2$) forment les points de connexion pour le circuit résonnant côté secondaire ($Re_{sek}$), et à condition qu'aucune diode à roue libre ne soit mise en place dans le semi-conducteur de puissance, une diode à roue libre ($D_F$) est à chaque fois connecté en parallèle à chaque semi-conducteur de puissance ($L_1$, $L_2$; $L_3$, $L_4$), et que les deux groupes ($Gr_1$, $Gr_2$) avec les anodes libres de l'un de leurs semi-conducteurs de puissance ($L_2$, $L_4$) sont mutuellement en contact dans le point ($P_1$) et sont ainsi connectés en série, et que, parallèlement au montage en série des deux groupes ($Gr_1$, $Gr_2$), au moins un condenseur ($C_A$) est connecté en parallèle et la puissance de sortie ($U_A$) est appliquée au condenseur ($C_A$).

2. Système de transfert d'énergie par induction selon la revendication 1, **caractérisé en ce que,** côté primaire, un premier redresseur (11) redresse une tension alternative ($U_N$) avec une fréquence de réseau ($f_0$) en une tension primaire unipolaire ($|U_N|$) qui est appliquée, côté entrée, sur l'onduleur côté primaire (15).

3. Système de transfert d'énergie par induction selon la revendication 1 ou 2, **caractérisé en ce que** le dispositif (E) présente en particulier quatre semi-conducteurs de puissance ($L_1$, $L_2$, $L_3$, $L_4$; $L_9$, $L_{10}$, $L_{11}$, $L_{12}$) qui forment deux groupes ($Gr_1$; $Gr_2$) présentant notamment le même nombre de semi-conducteurs de puissance, et les semi-conducteurs de puissance d'un groupe ($Gr_1$; $Gr_2$) sont soit commutés ensemble au moyen d'un signal de commande de groupe ($G_1$; $G_2$), les groupes ($Gr_1$, $Gr_2$) étant activés en alternance au moyen des signaux de commande de groupe ($G_1$; $G_2$), ou sont commutés au moyen d'un signal de commande de groupe séparé de sorte à ce que le circuit oscillant série secondaire ($Re_{sek}$) peut être court-circuité et qu'ainsi une surélévation de la tension de sortie ($U_A$) est possible.

4. Système de transfert d'énergie par induction selon l'une des revendications 1 à 3, **caractérisé en ce que** respectivement un seul groupe ($Gr_1$, $Gr_2$) de semi-conducteurs de puissance est activé et qu'un temps mort ($T_{tot}$) existe entre les phases actives des groupes, dans lequel les deux groupes ($Gr_1$, $Gr_2$) sont inactifs.

5. Système de transfert d'énergie par induction selon la notion de la revendication 1, dans lequel l'onduleur côté primaire (15) est cadencé ou réglé de telle sorte, ou bien le cadençage de la tension générée par l'onduleur côté primaire (15), notamment de la tension carrée, est sélectionné ou réglé de telle sorte que, lors d'une bobine primaire ($Sp_1$) et d'une bobine secondaire ($Sp_2$) couplées magnétiquement, une tension alternative secondaire ($U_i$), induite dans le circuit résonnant côté secondaire ($Re_{sek}$) et présentant une fréquence porteuse ($f_T$) est créée, où l'amplitude de la tension alternative secondaire ($U_i$) oscille à une fréquence de réseau ($f_0$) et qu'en aval du circuit résonnant côté secondaire ($Re_{sek}$) est monté un dispositif (E) qui génère une tension de sortie côté secondaire bipolaire ($U_A$) à partir de la tension ($U_i$) qui se trouve à la sortie du circuit résonnant côté secondaire ($Re_{sek}$), où la fréquence ($f_A$) de la tension de sortie côté secondaire ($U_A$) est égale à la fréquence de réseau ($f_0$) et que le dispositif (E) présente notamment quatre semi-conducteurs de puissance ($L_5$, $L_6$, $L_7$, $L_8$ ; $L_9$, $L_{10}$, $L_{11}$, $L_{12}$) qui forment deux groupes ($Gr_1$; $Gr_2$) présentant notamment le même nombre de semi-conducteurs de puissance, et les semi-conducteurs de puissance d'un groupe ($Gr_1$; $Gr_2$) sont commutés ensemble au moyen d'un signal de commande de groupe ($G_1$; $G_2$), les groupes ($Gr_1$, $Gr_2$) étant activés en alternance au moyen des signaux de commande de groupe ($G_1$; $G_2$), **caractérisé en ce que** chaque groupe ($Gr_1$; $Gr_2$) est formé à partir d'un semi-conducteur de puissance à conduction inverse ($L_5$, $L_7$; $L_9$, $L_{11}$), en particulier IGBT ou MOSFET à conduction inverse, et un semi-conducteur de puissance à blocage inverse ($L_6$, $L_8$; $L_{10}$, $L_{12}$), en particulier IGBT, respectivement MOSFET à blocage inverse, où soit le semi-conducteur de puissance à conduction inverse ($L_5$) du premier groupe ($Gr_1$) et le semi-conducteur de puissance à blocage inverse ($L_8$) du deuxième groupe ($Gr_2$) sont mutuellement reliés de manière électrique avec leurs anodes dans le point de connexion ($V_3$) et forment une première connexion série ($S_1$), et que le semi-conducteur de puissance à blocage inverse ($L_6$) du premier groupe ($Gr_1$) et le semi-conducteur de puissance à conduction inverse ($L_7$) du deuxième groupe ($Gr_2$) sont mutuellement reliés de manière électrique avec leurs anodes dans le point de connexion ($V_4$) et forment une deuxième connexion série ($S_2$), et à condition qu'aucune diode à roue libre ne soit mise en place dans le semi-conducteur de puissance à conduction inverse, une diode à roue libre ($D_F$) est à chaque fois connectée en parallèle à chaque semi-conducteur de puissance à conduction inverse ($L_5$, $L_7$), et que les connexions série ($S_1$, $S_2$) sont commutées parallèlement au condensateur de sortie ($C_A$), et les points de connexion ($V_3$, $V_4$) forment les bornes pour le circuit résonnant côté secondaire ($Re_{sek}$),

ou

les semi-conducteurs de puissance ($L_9$, $L_{10}$ ; $L_{11}$, $L_{12}$) de chaque groupe ($Gr_1$; $Gr_2$) sont connectés en série et sont activés au moyen du même signal de commande de groupe ($G_1$; $G_2$), où l'anode de l'un et la cathode de l'autre semi-conducteur de puissance ($L_9$, $L_{10}$) d'un premier groupe ($Gr_1$) sont mutuellement reliés de manière électrique dans un premier point de connexion ($V_1$) et l'anode de l'un et la cathode de l'autre semi-conducteur de puissance ($L_3$, $L_4$) de l'autre deuxième groupe ($Gr_2$) sont mutuellement reliés de manière électrique dans un deuxième point de connexion ($V_2$), et les points de connexion ($V_1$, $V_2$) forment les bornes pour le circuit résonnant côté secondaire ($Re_{sek}$), et qu'une diode à roue libre ($D_F$) est à chaque fois connectée en parallèle à chaque semi-conducteur de puissance à conduction inverse ($L_9$, $L_{11}$), à condition qu'aucune diode à roue libre ne soit pas déjà mise en place dans le semi-conducteur de puissance à conduction inverse ($L_9$, $L_{11}$), où l'anode du semi-conducteur de puissance à blocage inverse ($L_{10}$) du premier groupe ($Gr_1$) est relié de manière électriquement conductrice à la cathode du semi-conducteur de puissance à blocage inverse ($L_{12}$) du deuxième groupe ($Gr_2$) et la cathode du semi-conducteur de puissance à blocage inverse ($L_{10}$) du premier groupe ($Gr_1$) est relié de manière électriquement conductrice à l'anode du semi-conducteur de puissance à blocage inverse ($L_{12}$) du deuxième groupe ($Gr_2$) et les cathodes du semi-conducteur de puissance à conduction inverse ($L_9$, $L_{11}$) sont reliées aux bornes du condensateur de sortie ($C_A$).

6. Système de transfert d'énergie par induction selon l'une des revendications 1 à 5, **caractérisé en ce qu'**un dispositif de commande active les semi-conducteurs de puissance des groupes ($G_1$; $G_2$) en alternance au moyen du signal de commande de groupe ($G_1$, $G_2$) après chaque minimum local de l'enveloppante (EH) de la tension côté secondaire ($U_A$).

7. Système de transfert d'énergie par induction selon la revendication 6, **caractérisé en ce que,** avant l'activation du prochain groupe, les deux groupes ($Gr_1$, $Gr_2$) de semi-conducteurs de puissance sont inactifs pendant un temps mort ($T_{tot}$).

8. Système de transfert d'énergie par induction selon l'une quelconque des revendications précédentes, **caractérisé en ce que** le dispositif d'inversion de polarité est intégré dans le deuxième redresseur côté secondaire ou en est un composant.

9. Système de transfert d'énergie par induction selon l'une quelconque des revendications précédentes, **caractérisé en ce que** la fréquence de commutation de l'onduleur (15) est constante ou est adaptée à la fréquence de résonance du circuit résonnant côté primaire ($Re_{pri}$) ou réglée sur celle-ci.

10. Système de transfert d'énergie par induction selon l'une quelconque des revendications précédentes, **caractérisé en ce que** les composantes réactives de la tension d'au moins une bobine primaire et d'au moins une bobine secondaire ($Sp_1$, $Sp_2$) sont compensées au moyen de capacités.

11. Système de transfert d'énergie par induction selon l'une quelconque des revendications précédentes, **caractérisé en ce qu'**un condensateur de lissage côté primaire (12), qui présente en particulier une faible capacité, lisse la tension primaire unipolaire ($|U_N|$).

12. Système de transfert d'énergie par induction selon l'une quelconque des revendications précédentes, **caractérisé en ce que** la tension de sortie côté secondaire ($U_A$) possède la forme d'une tension alternative monophasée, dont l'amplitude est proportionnelle au flux magnétique dans la bobine secondaire ($Sp_2$).

13. Système de transfert d'énergie par induction selon l'une quelconque des revendications précédentes, **caractérisé en ce que** l'onduleur (15) ajuste ou règle le courant primaire circulant à travers la bobine primaire en fonction de l'amplitude requise par la tension de sortie côté secondaire ($U_A$).

14. Système de transfert d'énergie par induction selon l'une des revendications précédentes, **caractérisé en ce que** l'onduleur (15) règle de telle sorte le courant primaire circulant à travers la bobine primaire que l'amplitude de la tension de sortie côté secondaire correspond aux tracé d'amplitude, respectivement à leur enveloppante (EH) d'une tension alternative monophasée.

**15.** Système de transfert d'énergie par induction selon la revendication 13 ou 14, **caractérisé en ce qu'**un dispositif de mesure détermine l'amplitude de la tension de sortie côté secondaire ($U_A$) et transmet un signal correspondant à l'onduleur (15).

**16.** Système de transfert d'énergie par induction selon l'une des revendications précédentes, **caractérisé en ce que** la fréquence ($f_T$) de tension alternative secondaire se trouve dans une gamme kHz, en particulier entre 10 kHz et 150 kHz.

**17.** Système de transfert d'énergie par induction selon l'une des revendications précédentes, **caractérisé en ce que** la tension alternative secondaire est identique ou proche de

$$u_{sek}(t) = \hat{u}_{sek} * \sin(2*\Pi*f_T*t) * \sin(2*\Pi*f_0*t).$$

**18.** Système de transfert d'énergie par induction selon l'une des revendications précédentes, **caractérisé en ce que** l'onduleur côté primaire (15) est cadencé au moyen d'une cadence constante, d'une MLI ou d'un cadençage d'onde.

EP 2 769 450 B1

# Stand der Technik

Fig. 1

Fig. 2

Fig. 3

Fig. 5

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011127449 A
- EP 1249928 A1